(19) Europäisches Patentamt
European Patent Office
Office européen des brevets

(11) **EP 4 141 509 A1**

(12) **EUROPEAN PATENT APPLICATION**

(43) Date of publication:
**01.03.2023 Bulletin 2023/09**

(21) Application number: **22190495.6**

(22) Date of filing: **16.08.2022**

(51) International Patent Classification (IPC):
**G02B 17/08** (2006.01)   **G02B 13/16** (2006.01)
**G02B 27/18** (2006.01)   **G03B 21/14** (2006.01)
**G03B 21/28** (2006.01)

(52) Cooperative Patent Classification (CPC):
**G02B 27/18; G02B 13/16; G02B 17/0856;**
**G03B 21/14; G03B 21/28**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **31.08.2021   CN 202111008721**

(71) Applicant: **Coretronic Corporation**
**Hsin-Chu 300 (TW)**

(72) Inventors:
• **CHEN, YOU-DA**
**Hsin-Chu (TW)**

• **LYU, CHENG-HUAN**
**Hsin-Chu (TW)**
• **TSAI, HSIN-WEN**
**Hsin-Chu (TW)**
• **WU, WEI-TING**
**Hsin-Chu (TW)**
• **WEI, CHING-CHUAN**
**Hsin-Chu (TW)**

(74) Representative: **Ter Meer Steinmeister & Partner**
**Patentanwälte mbB**
**Nymphenburger Straße 4**
**80335 München (DE)**

(54) **PROJECTION LENS AND PROJECTION APPARATUS**

(57)     A projection lens includes a first lens group, an aperture stop, a second lens group, a reflective optical element, and a refractive optical element arranged in sequence on a transmission path of an image beam. The first lens group, the aperture stop and the second lens group are sequentially arranged from a minified side to a magnified side along an optical axis. The reflective optical element and the refractive optical element are located on opposite sides of the optical axis. The image beam sequentially passes through the first lens group, the aperture stop and the second lens group from the minified side to be transmitted to the reflective optical element. The image beam is reflected by the reflective optical element to the refractive optical element, and passes through the refractive optical element to form a projection beam toward the magnified side.

FIG. 2

EP 4 141 509 A1

**Description**

BACKGROUND OF THE DISCLOSURE

Field of the Disclosure

The disclosure relates to an optical lens and an optical apparatus, and more particularly to a projection lens and a projection apparatus.

Description of Related Art

The conventional ultra-short throw projection lens generally includes a first optical system, a second optical system, a first aperture stop, a second aperture stop, and a reflective optical system (which can be a concave mirror) arranged from a minified side to a magnified side. The first optical system includes a plurality of lenses for receiving an image from the light valve at the minified side and forming a first intermediate image. The second optical system includes a plurality of lenses for receiving the first intermediate image from the minified side and forming a second intermediate image. The reflective optical system has positive refractive power and is closer to the magnified side than the second intermediate image. The first aperture stop is provided between the light emitting surface of the light valve and the first intermediate image. The second aperture stop is provided between the first intermediate image and the second intermediate image. The second intermediate image is enlarged and projected on the screen by the reflective surface of the reflective optical system.

However, the conventional ultra-short throw projection lens has too many lenses, which leads to higher production costs and weight. Moreover, on basis of the optical system described above, the mechanism design of the optical system is relatively complicated, and the overall length of the projection lens is longer.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the disclosure was acknowledged by a person of ordinary skill in the art.

SUMMARY OF THE DISCLOSURE

It is an object of the present disclosure to provide a projection lens that can reduce the number of lenses in the system.

It is an object of the present disclosure to provide a projection apparatus using the projection lens, which has a smaller system length and a lower cost.

The object is solved by the features of the independent claim. Preferred embodiments are given in the dependent claims.

An embodiment of the disclosure provides a projection lens. The projection lens is configured for receiving an image beam. The projection lens includes a first lens group, an aperture stop, a second lens group, a reflective optical element, and a refractive optical element arranged in sequence on a transmission path of the image beam. And the first lens group, the aperture stop and the second lens group are arranged in sequence from a minified side to a magnified side along an optical axis. The first lens group includes a plurality of lenses having refractive power. The second lens group includes a plurality of lenses having refractive power. The aperture stop is located between the first lens group and the second lens group. The reflective optical element and the refractive optical element are respectively located on two opposite sides of the optical axis. The image beam passes through the first lens group and the second lens group in sequence from the minified side, and then is transmitted to the reflective optical element. The image beam is reflected by the reflective optical element to the refractive optical element, and then passes through the refractive optical element to form a projection beam toward the magnified side.

In one or more embodiments, the first lens group may comprise six lenses.

In one or more embodiments, the refractive powers of the six lenses may be positive, positive, negative, positive, positive, and negative in sequence from the minified side to the magnified side.

In one or more embodiments, the second lens group may comprise five lenses.

In one or more embodiments, the refractive powers of the five lenses may be positive, negative, negative, negative, and positive in sequence from the minified side to the magnified side.

In one or more embodiments, the first lens group may comprise at least one cemented lens.

In one or more embodiments, the first lens group may comprise at least one aspheric lens, and the second lens group may comprise at least one aspheric lens.

In one or more embodiments, the reflective optical element may comprise a light incident surface, a reflective surface, and a first plane.

In one or more embodiments, the light incident surface may be disposed adjacent to the second lens group.

In one or more embodiments, the refractive optical element may have a negative refractive power.

In one or more embodiments, the image beam may be reflected by the reflective surface to the first plane.

In one or more embodiments, the image beam may then pass through the first plane to be transmitted to the refractive optical element.

In one or more embodiments, the light incident surface may have a positive refractive power and is aspherical.

In one or more embodiments, the reflective surface may have the positive refractive power and is aspherical.

In one or more embodiments, the refractive optical element may comprise a second plane and a refractive surface.

In one or more embodiments, the image beam from the reflective optical element may pass through the second plane and the refractive surface in sequence to form the projection beam.

In one or more embodiments, the refractive surface of the refractive optical element may be a convex surface facing the magnified side.

In one or more embodiments, the refractive surface may have a negative refractive power and is aspherical.

In one or more embodiments, the first plane and the second plane may be coplanar.

In one or more embodiments, the optical axis may fall on the first plane.

In one or more embodiments, the reflective optical element and the refractive optical element may have the same refractive index.

In one or more embodiments, the reflective optical element and the refractive optical element may be integrally formed.

In one or more embodiments, the second lens group may comprise at least one asymmetric lens.

In one or more embodiments, an aperture of the projection lens may fall within a range of 1.7 to 2.0.

In one or more embodiments, the first lens group may be a compensation group.

In one or more embodiments, the second lens group may be a focusing group, when the projection lens is focusing, the first lens group and the second lens group may move along the optical axis.

An embodiment of the disclosure provides a projection apparatus, which includes an illumination system, a light valve, and a projection lens. The illumination system is configured to provide an illumination beam. The light valve is arranged on the transmission path of the illumination beam, and is configured to convert the illumination beam into an image beam. The projection lens is arranged on the transmission path of the image beam, and is configured for receiving the image beam and projecting the projection beam. The projection lens includes a first lens group, an aperture stop, a second lens group, a reflective optical element and a refractive optical element arranged in sequence on a transmission path of the image beam. And the first lens group, the aperture stop and the second lens group are arranged in sequence from a minified side to a magnified side along an optical axis. The first lens group includes a plurality of lenses having refractive power. The second lens group includes a plurality of lenses having refractive power. The aperture stop is located between the first lens group and the second lens group. The reflective optical element and the refractive optical element are respectively located on two opposite sides of the optical axis. The image beam passes through the first lens group and the second lens group in sequence from the minified side, and then is transmitted to the reflective optical element. The image beam is reflected by the reflective optical element to the refractive optical element, and then passes through the refractive optical element to form a projection beam toward the magnified side.

Based on the above, in an embodiment of the disclosure, the projection lens is designed with a smaller number of lenses to reduce the overall size, and then the image beam from the first lens group and the second lens group is projected through the reflective optical element and the refractive optical element to form a projection beam. Therefore, the optical structure of the projection lens or the projection apparatus is relatively simple, which makes the design of the mechanism easier.

Other objectives, features and advantages of the present disclosure will be further understood from the further technological features disclosed by the embodiments of the present disclosure wherein there are shown and described preferred embodiments of this disclosure, simply by way of illustration of modes best suited to carry out the disclosure.

BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.

FIG. 1 is a block diagram of a projection apparatus according to an embodiment of the disclosure.
FIG. 2 is a schematic diagram of a projection lens in the projection apparatus of FIG. 1.

FIG. 3 to FIG. 7 are the transverse ray fan plots of the projection lens of FIG. 2 at different object heights.

FIG. 8 to FIG. 12 are respectively spot diagrams of different wavelengths of light after passing through the projection lens of FIG. 2 at different image heights and object heights.

FIG. 13 is a modulation transfer function diagram of the projection lens of FIG. 2.

DESCRIPTION OF EMBODIMENTS

In the following detailed description of the preferred embodiments, reference is made to the accompanying drawings which form a part hereof, and in which are shown by way of illustration specific embodiments in which disclosure may be practiced. In this regard, directional terminology, such as "top," "bottom," "front," "back," etc., is used with reference to the orientation of the Figure(s) being described. The components of the present disclosure can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present disclosure. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

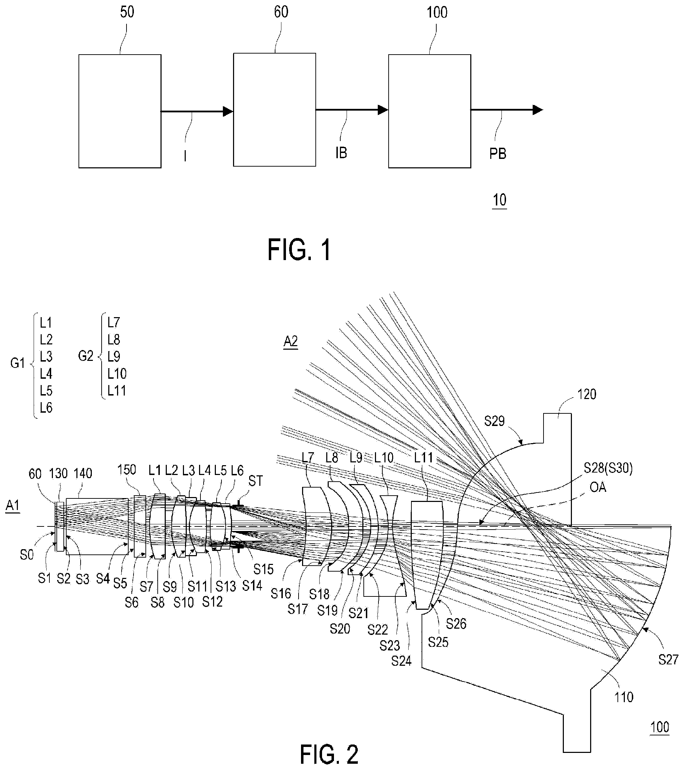

FIG. 1 is a block diagram of a projection apparatus according to an embodiment of the disclosure. Please refer to FIG. 1, an embodiment of the disclosure provides a projection apparatus 10, which includes an illumination system 50, a light valve 60 and a projection lens 100. The illumination system 50 is configured to provide an illumination beam I. The light valve 60 is disposed on the transmission path of the illumination beam I emitted from the illumination system 50, and is configured to convert the illumination beam I into an image beam IB. The projection lens 100 is disposed on the transmission path of the image beam IB, and is configured for receiving the image beam IB from the light valve 60 and projecting the projection beam PB to the outside of the projection apparatus 10.

In detail, the illumination system 50 of this embodiment includes, for example, multiple light-emitting elements, wavelength conversion element, homogenizing element, filter element, and multiple light splitting and combining elements. The illumination system 50 is used to provide light of different wavelengths as the source of image beam. The multiple light-emitting elements are, for example, a metal halide lamp, a high-pressure mercury lamp, or a solid-state illumination source, such as a light-emitting diode array, a laser diode array, and etc. However, the disclosure provides no limitation to the type or form of the illumination system 50 in the projection apparatus 10. The detailed structure and implementation of the illumination system 50 can be obtained from the common knowledge in the technical field with sufficient teaching, suggestion and implementation, so no further description is incorporated herein.

In this embodiment, the light valve 60 is, for example, a reflective light modulator such as a liquid crystal on silicon panel (LCOS panel) or a digital micro-mirror device (DMD). In some embodiments, the light valve 60 may also be a transmissive light modulator such as a transparent liquid crystal panel, an electro-optical modulator, a magneto-optic modulator and an acousto-optic modulator (AOM). The disclosure provides no limitation to the form and type of the light valve 60. The detailed steps and implementation of the method for the light valve 60 to convert the illumination beam I into the image beam IB can be obtained from the common knowledge in the technical field with sufficient teaching, suggestion and implementation, and therefore no further description is incorporated herein. In this embodiment, the number of light valves 60 is one. For example, a single digital micro-mirror element (DMD) is disposed in the projection apparatus 10, but in other embodiments there may be more than one light valve 60, and the disclosure is not limited thereto.

FIG. 2 is a schematic diagram of a projection lens in the projection apparatus of FIG. 1. Please refer to FIG. 2, in this embodiment, the projection lens 100 has an optical axis OA. The projection lens 100 includes a first lens group G1, an aperture stop ST, a second lens group G2, a reflective optical element 110, and a refractive optical element 120 arranged in sequence on the transmission path of the image beam IB. The first lens group G1, the aperture stop ST and the second lens group G2 are arranged in sequence from a minified side A1 to a magnified side A2 along the optical axis OA. The reflective optical element 110 and the refractive optical element 120 are disposed between the second lens group G2 and the magnified side A2, and are respectively located on two opposite sides of the optical axis OA. The first lens group G1 includes a plurality of lenses having refractive power. The second lens group G2 includes a plurality of lenses having refractive power. The aperture stop ST is an equivalent aperture stop, and the element may not be provided physically in actual applications. The aperture stop ST is located between the first lens group G1 and the second lens group G2. The image beam IB passes through the first lens group G1 and the second lens group G2 in sequence from the minified side A1, and then is transmitted to the reflective optical element 110. The image beam IB is reflected by the reflective optical element 110 and transmitted to the refractive optical element 120 located on the other side of the optical axis OA, and then passes through the refractive optical element 120 to form a projection beam PB toward the magnified side A2.

In this embodiment, the first lens group G1 includes six lenses L1, L2, L3, L4, L5, and L6 that are arranged in sequence from the minified side A1 to the magnified side A2 along the optical axis OA. The refractive powers of the six lenses L1, L2, L3, L4, L5, and L6 are positive, positive, negative, positive, positive, and negative in sequence. The second lens group G2 includes five lenses L7, L8, L9, L10, and L11 arranged in sequence from the minified side A1 to the magnified side A2 along the optical axis OA. The refractive powers of the five lenses L7, L8, L9, L10, and L11 are positive, negative, negative, negative, and positive in sequence. In this manner, the number of lenses used in the projection lens 100 is reduced to 11, so that the length of the projection lens is reduced, the volume of material of the system can also be decreased, and the cost is further lowered.

In this embodiment, the first lens group G1 includes at least one cemented lens. For example, the first lens group G1 includes two cemented lenses. One of the two cemented lenses is formed by cementing the lenses L2, L3, and L4, and the other of the two cemented lenses is formed by cementing the lenses L5 and L6.

In this embodiment, the first lens group G1 includes at least one aspheric lens. The second lens group G2 includes at least one aspheric lens. For example, the lens L5 in the first lens group G1 or the lenses L8 and L10 in the second lens group G2 are aspheric lenses.

In this embodiment, the second lens group G2 includes at least one asymmetric lens, where the asymmetry is defined relative to the optical axis OA. For example, both the lens L10 and the lens L11 are asymmetric lenses, that is, the optical axis OA does not pass through the center point of the lens L10 and the lens L11. Therefore, the design of the asymmetric lens in the second lens group G2 prevents the optical path of the image beam IB from being interfered by the lens, which helps reduce the volume of the system. The projection lens 100 is disposed on the transmission path of the image beam IB.

In this embodiment, the reflective optical element 110 includes a light incident surface S26, a reflective surface S27, and a first plane S28. The first plane S28 is the light emitting surface of the reflective optical element 110, and the optical axis OA falls on the first plane S28. The light incident surface S26 of the reflective optical element 110 is disposed adjacent to the second lens group G2. To further illustrate, the light incident surface S26 of the reflective optical element 110 is arranged adjacent to the lens L11 in the second lens group G2, so that the image beam from the second lens group G2 enters the reflective optical element 110 from the light incident surface S26 and is transmitted to the reflective surface S27 on one side of the optical axis OA. The light incident surface S26 has positive refractive power and is an aspherical surface. The reflective surface S27 has positive refractive power and is an aspherical surface. The image beam IB is reflected by the reflective surface S27 to the first plane S28, and then passes through the first plane S28 to be transmitted to the refractive optical element 120 located on the other side of the optical axis OA.

In this embodiment, the refractive optical element 120 has a negative refractive power. The refractive optical element 120 includes a second plane S30 and a refractive surface S29. The optical axis OA falls on the second plane S30, that is, the first plane S28 of the reflective optical element 110 and the second plane S30 of the refractive optical element 120 are arranged corresponding to each other and parallel to the optical axis OA. The refractive surface S29 of the refractive optical element 120 is a convex surface facing the magnified side A2. The refractive surface S29 has a negative refractive power and is an aspherical surface. However, in another embodiment, the refractive surface S29 of the refractive optical element 120 may also be designed as a concave surface. The image beam IB from the reflective optical element 110 passes through the second plane S30 and the refractive surface S29 of the refractive optical element 120 in sequence to form a projection beam PB.

In this embodiment, the reflective optical element 110 and the refractive optical element 120 have the same refractive index. In an embodiment, the reflective optical element 110 and the refractive optical element 120 may be integrally formed, and the first plane S28 and the second plane S30 are the same surface.

The following Table 1 and Table 2 list the data of a preferred embodiment of the projection lens 100. However, the information listed below is not intended to limit the disclosure. Anyone familiar with the art in the related field can make appropriate changes to its parameters or settings after referring to the disclosure, but the change should still fall within the scope of the disclosure.

In this embodiment, the actual design of the aforementioned elements can be derived from Table 1 below.

Table 1

| Element | Surface | Type | Curvature (1/mm) | Distance (mm) | Refractive index (Nd) | Abbe number (Vd) |
|---|---|---|---|---|---|---|
| 60 | S0 | Plane | Infinite | 0.303 | | |
| 130 | S1 | Plane | Infinite | 1.100 | 1.51 | 62.9 |
| | S2 | Plane | Infinite | 0.500 | | |
| 140 | S3 | Plane | Infinite | 11.200 | 1.72 | 38.0 |
| | S4 | Plane | Infinite | 1.000 | | |
| 150 | S5 | Plane | Infinite | 2.000 | 1.52 | 58.5 |
| | S6 | Plane | Infinite | 0.865 | | |
| L1 | S7 | Spherical | 22.13576 | 3.241 | 1.92 | 18.8 |
| | S8 | Spherical | -56.9036 | 1.758 | | |
| L2 | S9 | Spherical | 9.251041 | 2.777 | 1.50 | 81.3 |
| L3 | S10 | Spherical | 33.78041 | 0.592 | 1.78 | 31.9 |
| L4 | S11 | Spherical | 6.286626 | 2.817 | 1.53 | 74.3 |
| | S12 | Spherical | 53.82898 | 0.200 | | |
| L5 | S13 | Aspherical | 15.66435 | 2.433 | 1.51 | 64.0 |
| L6 | S14 | Spherical | -8.90813 | 1.229 | 1.77 | 22.5 |
| | S15 | Spherical | -31.6756 | 1.648 | | |
| ST | | Plane | Infinite | 10.271 | | |
| L7 | S16 | Spherical | -101.531 | 4.400 | 1.85 | 26.6 |
| | S17 | Spherical | -15.8067 | 2.981 | | |
| L8 | S18 | Aspherical | -15.9884 | 2.635 | 1.52 | 56.3 |
| | S19 | Aspherical | -21.4968 | 0.973 | | |
| L9 | S20 | Spherical | -13.1242 | 1.692 | 1.52 | 69.1 |
| | S21 | Spherical | -15.5875 | 1.955 | | |
| L10 | S22 | Aspherical | -12.714 | 1.993 | 1.52 | 56.3 |
| | S23 | Aspherical | 13.00699 | 2.083 | | |
| L11 | S24 | Spherical | 39.70768 | 4.923 | 1.83 | 30.3 |
| | S25 | Spherical | -39.1239 | 4.000 | | |
| 110 | S26 | Aspherical | -14.892 | 32.375 | 1.53 | 56.3 |
| | S27 | Aspherical | -23.2221 | | | |
| 120 | S28 | Plane | Infinite | -32.375 | 1.53 | 56.3 |
| | S29 | Aspherical | 12.89965 | | | |

In Table 1, the lens L1 has a surface S7 and a surface S8 from the minified side A1 to the magnified side A2, and the lens L2 has a surface S9 and a surface S10 from the minified side A1 to the magnified side A2 in sequence. The lens L2, lens L3, and lens L4 are a set of cemented lenses, so the surface S10 of lens L2 facing the magnified side A2 and the surface S10 of lens L3 facing the minified side A1 are the same surface, and the surface S11 of lens L3 facing the magnified side A2 and the surface S11 of lens L4 facing the minified side A1 are the same surface. By analogy, the surfaces corresponding to various elements will not be further described here. In addition, in Table 1, "distance" refers to the distance between two adjacent surfaces along the optical axis OA. For example, the distance corresponding to the surface S1 refers to the distance between the surface S1 and the surface S2 along the optical axis OA, and the distance corresponding to the surface S2 is the linear distance between the surface S2 and the surface S3 along the optical axis OA, and so on.

In this embodiment, the surface S13 of the lens L5, the surface S18 and the surface S19 of the lens L8, the surface S22 and the surface S23 of the lens L10, the light incident surface S26 and the reflective surface S27 of the reflective optical element 110, and the refractive surface S29 of the refractive optical element 120 are all aspherical, and the surfaces of the rest of lenses are all spherical. The formula for aspheric surfaces is as follows:

$$\mathrm{x} = \frac{c'y^2}{1 + \sqrt{1 - (1+K)c'^2 y^2}} + Ay^2 + Ay^4 + By^6 + Cy^8 + Dy^{10} + Ey^{12}$$
$$+ Fy^{14} + Gy^{16} \cdots$$

In the above equation, x is a sag in a direction of the optical axis, c' is a reciprocal of radius of an osculating sphere, i.e., a reciprocal of a radius of curvature near the optical axis, K is a conic coefficient, and y is an aspheric height, i.e., a height from a lens center to a lens edge. A-G respectively represent the various aspheric coefficients of the aspheric polynomial. The following Table 2 lists the parameter values of the surface S13 of the lens L5, the surface S18 and the surface S19 of the lens L8, the surface S22 and the surface S23 of the lens L10, the light incident surface S26 and the reflective surface S27 of the reflective optical element 110, and the refractive surface S29 of the refractive optical element 120, and the second-order aspheric coefficients A are all 0.

Table 2

|   | S13 | S18 | S19 | S22 |
|---|---|---|---|---|
| K | 6.816297 | 0.000 | 0.000 | 0.802 |
| B | -4.29E-04 | -1.31E-03 | -1.45E-03 | -3.51E-04 |
| C | 2.77E-05 | 2.03E-05 | 2.79E-05 | 5.21E-06 |
| D | -9.12E-06 | -6.07E-07 | -4.64E-07 | 2.43E-07 |
| E | 1.39E-06 | 2.11E-08 | 7.55E-09 | -7.83E-09 |
| F | -1.18E-07 | -3.73E-10 | -6.80E-11 | 1.07E-10 |
| G | 5.13E-09 | 3.43E-12 | 2.31E-13 | -7.10E-13 |
| H | -9.07E-11 | -1.60E-14 | -6.43E-16 | 1.78E-15 |
|   | S23 | S26 | S27 | S29 |
| K | 0.000 | 0.000 | -0.89373 | 0.000 |
| B | -3.22E-04 | 2.34E-05 | -2.21E-06 | -1.01E-05 |
| C | 2.40E-06 | 1.64E-08 | -2.61E-09 | 1.72E-07 |
| D | -2.31E-08 | 6.05E-10 | 3.84E-12 | -1.8E-10 |
| E | 1.63E-10 | 4.16E-12 | 4.02E-16 | -8.2E-12 |
| F | -1.00E-12 | 1.65E-14 | -1.02E-18 | 2.01E-14 |
| G | 3.93E-15 | 3.57E-17 | 3.56E-21 | 2.85E-16 |
| H | -9.58E-18 | -1.04E-18 | -2.08E-23 | -9.9E-19 |

In this embodiment, the aperture of the projection lens 100 falls within the range of 1.7 to 2.0.

In this embodiment, the first lens group G1 of the projection lens 100 is a compensation group, and the second lens group G2 is a focusing group. When the projection lens 100 is focusing, the first lens group G1 moves along the optical axis OA to compensate for the clarity of the paraxial image, and the second lens group G2 moves along the optical axis OA to adjust the resolution of the image in the off-axis field of view. Since the focal length of the projection lens 100 can be adjusted, a clear projection image can be maintained. To further illustrate, since the distance between the second lens group G2 and the reflective optical element 110 on the optical axis OA is relatively small, for example, as shown in Table 1, the distance between the surface S25 of the lens L11 and the light incident surface S26 of the reflective optical element 110 is 4 mm, the overall length of the projection lens 100 is reduced by setting a smaller interval. In the embodiment, the distance between the second lens group G2 and the reflective optical element 110 on the optical axis OA is changeable and is greater than 0 during adjusting the resolution of the image.

In addition, in this embodiment, the projection lens 100 further includes glass members 130 and 150 and a prism 140 disposed between the light valve 60 and the first lens group G1. The glass member 130, the prism 140 and the glass member 150 are arranged in sequence from the minified side A1 to the magnified side A2 along the optical axis OA. The glass member 130 is, for example, a protection cover for the light valve 60.

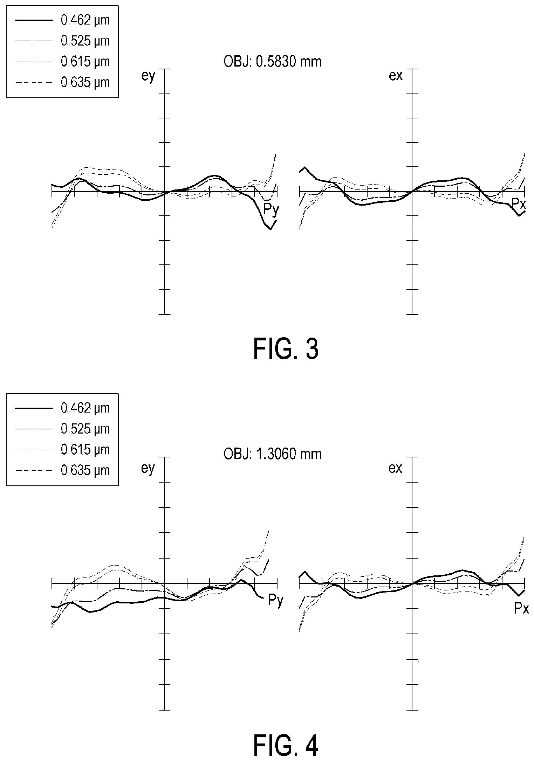

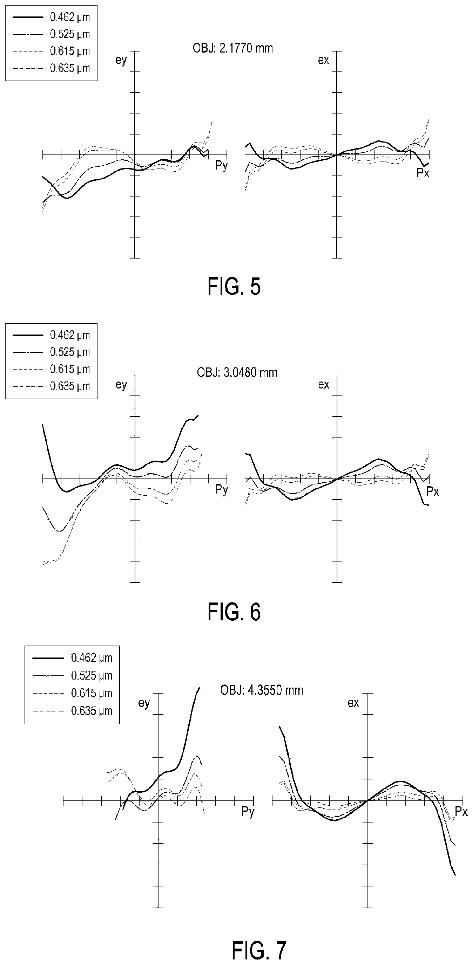

FIG. 3 to FIG. 7 are the transverse ray fan plots of the projection lens of FIG. 2 at different object heights, in which the maximum and minimum scales of the ex, ey, Px and Py axes are +500$\mu$m and -500$\mu$m respectively. Please refer to FIG. 3 to FIG. 7. The graphics shown in FIG. 3 to FIG. 7 are all within the standard range, which proves that the projection lens 100 of this embodiment can achieve a good optical imaging quality.

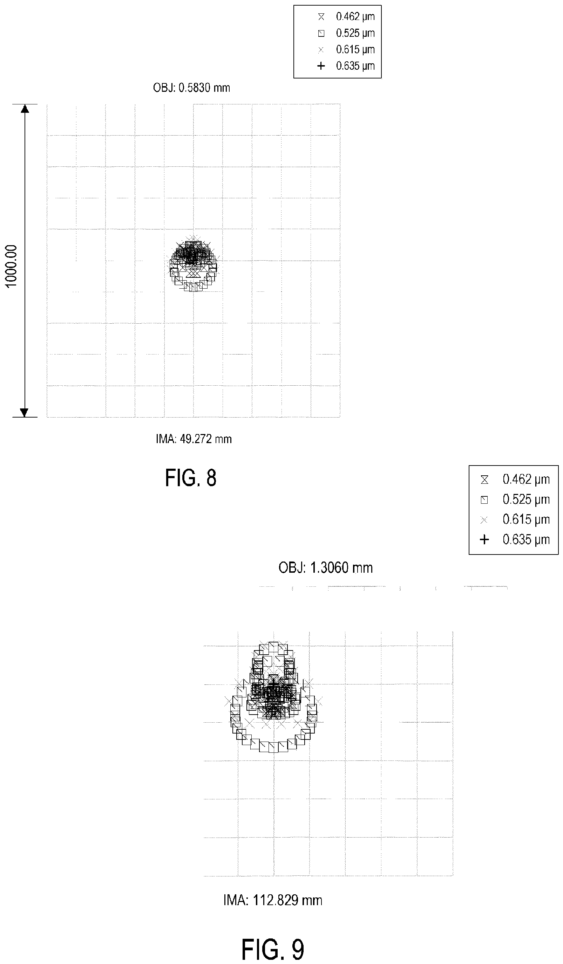

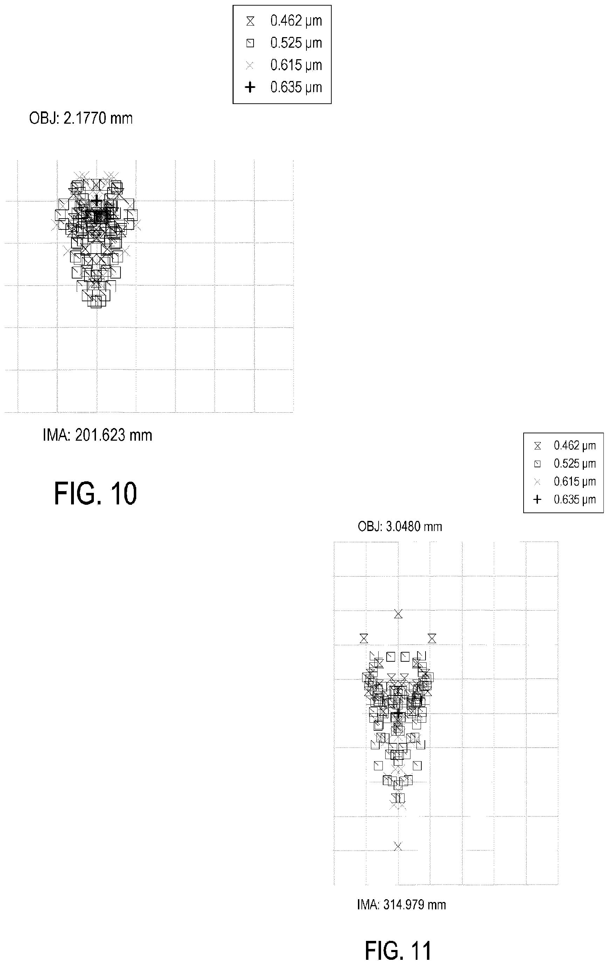

FIG. 8 to FIG. 12 are respectively spot diagrams of different wavelengths of light after passing through the projection lens of FIG. 2 at different image heights and object heights. The maximum range of the axis x and the axis y is 1000$\mu$m. Please refer to FIG. 8 to FIG. 12, the light spot of various wavelengths of light after passing through the projection lens 100 is not too large, so the image projected by the projection lens 100 of this embodiment has a higher imaging quality.

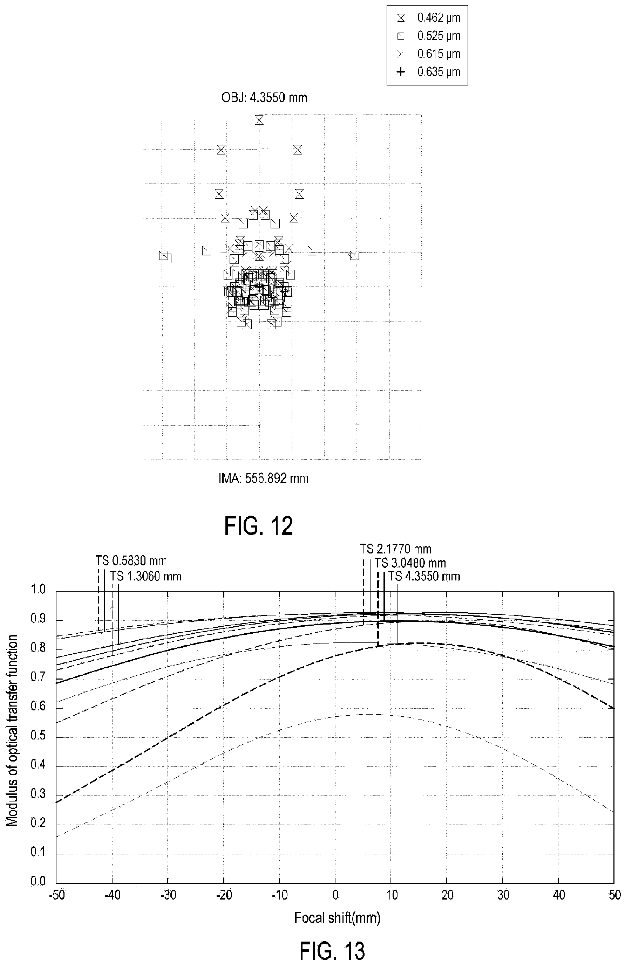

FIG. 13 is a modulation transfer function diagram of the projection lens of FIG. 2. Please refer to FIG. 13. FIG. 13 is a modulation transfer function (MTF) diagram of the projection lens 100 at different image heights, in which the horizontal axis represents the focus shift, and the vertical axis represents the modulus of the optical transfer function, T represents the curve in the tangential direction, S represents the curve in the sagittal direction, and the value marked next to "TS" represents the image height. It can be proved that the optical transfer function curve displayed by the projection lens 100 of this embodiment is within the standard range, and therefore has a good optical imaging quality, as shown in FIG. 13.

In summary, in an embodiment of the disclosure, the projection lens or the projection apparatus is provided with a reflective optical element and a refractive optical element both. The image beam is transmitted to the reflective optical element through the first lens group and the second lens group of the projection lens, and then the image beam is projected through the reflective optical element and the refractive optical element to form a projection beam. Therefore, the optical structure of the projection lens or the projection apparatus is relatively simple, which makes the design of the mechanism easier.

The foregoing description of the preferred embodiments of the disclosure has been presented for purposes of illustration and description. It is not intended to be exhaustive or to limit the exemplary disclosure to the precise form or to embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the disclosure and its best mode practical application, thereby enable persons skilled in the art to understand the disclosure for various embodiments and with various modifications as are suited to the particular use or implementation contemplated. It is intended that the scope of the disclosure be defined by the claims appended hereto and their equivalents in which all terms are meant in their broadest reasonable sense unless otherwise indicated. Therefore, the term "the disclosure", "the present disclosure" or the like does not necessarily limit the claim scope to a specific embodiment, and the reference to particularly preferred exemplary embodiments of the disclosure does not imply a limitation on the disclosure, and no such limitation is to be inferred. The disclosure is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the disclosure. It should be appreciated that variations may be made in the embodiments described by persons skilled in the art without departing from the scope of the present disclosure as defined by the following claims. Moreover, no element and component in the present disclosure is intended to be dedicated to the public regardless of whether the element or component is explicitly recited in the following claims.

**Claims**

1. A projection lens (100) configured for receiving an image beam (IB), comprising a first lens group (G1), an aperture stop (ST), a second lens group (G2), a reflective optical element (110), and a refractive optical element (120) arranged in sequence on a transmission path of the image beam (IB), wherein the first lens group (G1), the aperture stop (ST) and the second lens group (G2) are arranged in sequence from a minified side (A1) to a magnified side (A2) along an optical axis (OA); wherein:

the first lens group (G1) comprises a plurality of lenses having a refractive power;
the second lens group (G2) comprises a plurality of lenses having the refractive power;
the aperture stop is located between the first lens group and the second lens group; and
the reflective optical element (110) and the refractive optical element (120) are respectively located on two opposite sides of the optical axis (OA),
wherein the image beam (IB) passes through the first lens group (G1) and the second lens group (G2) in sequence from the minified side (A1), and then is transmitted to the reflective optical element (110), the image beam (IB) is reflected by the reflective optical element (110) to the refractive optical element (120), and then passes through the refractive optical element (120) to form a projection beam (PB) toward the magnified side (A2).

2. The projection lens (100) according to claim 1, wherein the first lens group (G1) comprises six lenses (L1~L6), and the refractive powers of the six lenses (L1~L6) are positive, positive, negative, positive, positive, and negative in sequence from the minified side (A1) to the magnified side (A2).

3. The projection lens (100) according to claim 1 or 2, wherein the second lens group (G2) comprises five lenses (L7~L11), and the refractive powers of the five lenses (L7~L11) are positive, negative, negative, negative, and positive in sequence from the minified side (A1) to the magnified side (A2).

4. The projection lens (100) according to any one of the preceding claims, wherein the first lens group (G1) comprises at least one cemented lens and/or the first lens group (G1) comprises at least one aspheric lens, and the second lens group (G2) comprises at least one aspheric lens.

5. The projection lens (100) according to any one of the preceding claims, wherein the reflective optical element (110) comprises a light incident surface (S26), a reflective surface (S27), and a first plane (S28), and the light incident surface (S26) is disposed adjacent to the second lens group (G2) and/or the refractive optical element (120) has a negative refractive power.

6. The projection lens (100) according to claim 5, wherein the image beam (IB) is reflected by the reflective surface (S27) to the first plane (S28), and then passes through the first plane (S28) to be transmitted to the refractive optical element (120) and/or the optical axis (OA) falls on the first plane (S28).

7. The projection lens (100) according to claim 4 or 5, wherein the light incident surface (S26) has a positive refractive power and is aspherical, and the reflective surface (S27) has the positive refractive power and is aspherical.

8. The projection lens (100) according to any one of the preceding claims, wherein the refractive optical element (120) comprises a second plane (S30) and a refractive surface (S29), and the image beam (IB) from the reflective optical element (110) passes through the second plane (S30) and the refractive surface (S29) in sequence to form the projection beam (PB).

9. The projection lens (100) according to claim 8, wherein the refractive surface (S29) of the refractive optical element (120) is a convex surface facing the magnified side (A2) and/or the refractive surface (S29) has a negative refractive power and is aspherical.

10. The projection lens (100) according to claims 8 or 9, wherein the first plane (S28) and the second plane (S30) are coplanar.

11. The projection lens (100) according to any one of the preceding claims, wherein the reflective optical element (110) and the refractive optical element (120) have the same refractive index and/or the reflective optical element (110) and the refractive optical element (120) are integrally formed.

12. The projection lens (100) according to any one of the preceding claims, wherein the second lens group (G2) comprises at least one asymmetric lens.

13. The projection lens (100) according to any one of the preceding claims, wherein an aperture of the projection lens (100) falls within a range of 1.7 to 2.0.

**14.** The projection lens (100) according to any one of the preceding claims, wherein the first lens group (G1) is a compensation group, and the second lens group (G2) is a focusing group, when the projection lens (100) is focusing, the first lens group (G1) and the second lens group (G2) move along the optical axis (OA).

**15.** An projection apparatus (10), comprising an illumination system (50), a light valve (60), and a projection lens (100), wherein the projection lens (100) is realized according to any one of the preceding claims,

the illumination system (50) is configured to provide an illumination beam (I);
the light valve (60) is configured on a transmission path of the illumination beam (I), and configured to convert the illumination beam (I) into an image beam (IB); and
the projection lens (100) is configured on a transmission path of the image beam (IB).

FIG. 1

FIG. 2

| | |
|---|---|
| —— | 0.462 μm |
| —·— | 0.525 μm |
| — — | 0.615 μm |
| – – – | 0.635 μm |

OBJ: 0.5830 mm

ey

ex

Py

Px

## FIG. 3

| | |
|---|---|
| —— | 0.462 μm |
| —·— | 0.525 μm |
| — — | 0.615 μm |
| – – – | 0.635 μm |

OBJ: 1.3060 mm

ey

ex

Py

Px

## FIG. 4

FIG. 5

FIG. 6

FIG. 7

| | |
|---|---|
| ⊠ | 0.462 µm |
| ⊡ | 0.525 µm |
| × | 0.615 µm |
| + | 0.635 µm |

OBJ: 0.5830 mm

1000.00

IMA: 49.272 mm

FIG. 8

| | |
|---|---|
| ⊠ | 0.462 µm |
| ⊡ | 0.525 µm |
| × | 0.615 µm |
| + | 0.635 µm |

OBJ: 1.3060 mm

IMA: 112.829 mm

FIG. 9

| | |
|---|---|
| ⊠ | 0.462 μm |
| ⊡ | 0.525 μm |
| ⤬ | 0.615 μm |
| + | 0.635 μm |

OBJ: 2.1770 mm

IMA: 201.623 mm

# FIG. 10

| | |
|---|---|
| ⊠ | 0.462 μm |
| ⊡ | 0.525 μm |
| ⤬ | 0.615 μm |
| + | 0.635 μm |

OBJ: 3.0480 mm

IMA: 314.979 mm

# FIG. 11

| ⊠ | 0.462 µm |
|---|---|
| ◻ | 0.525 µm |
| × | 0.615 µm |
| + | 0.635 µm |

OBJ: 4.3550 mm

IMA: 556.892 mm

## FIG. 12

TS 0.5830 mm
TS 1.3060 mm
TS 2.1770 mm
TS 3.0480 mm
TS 4.3550 mm

Modulus of optical transfer function

Focal shift(mm)

## FIG. 13

Europäisches
Patentamt

European
Patent Office

Office européen
des brevets

## EUROPEAN SEARCH REPORT

Application Number

EP 22 19 0495

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/232035 A1 (YANAGISAWA HIROTAKA [JP]) 29 July 2021 (2021-07-29) * figures 21,22,23 * ----- | 1-15 | INV. G02B17/08 G02B13/16 G02B27/18 |
| X | US 2020/278601 A1 (YANAGISAWA HIROTAKA [JP] ET AL) 3 September 2020 (2020-09-03) * figures 2-5 * ----- | 1,4,12 | G03B21/14 G03B21/28 |

TECHNICAL FIELDS
SEARCHED (IPC)

G02B
G03D
G03B

The present search report has been drawn up for all claims

| Place of search | Date of completion of the search | Examiner |
|---|---|---|
| Munich | 20 January 2023 | Muller, Nicolas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 19 0495

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2023

| Patent document cited in search report | | Publication date | Patent family member(s) | | Publication date |
|---|---|---|---|---|---|
| US 2021232035 | A1 | 29-07-2021 | CN | 113176698 A | 27-07-2021 |
| | | | JP | 2021117317 A | 10-08-2021 |
| | | | US | 2021232035 A1 | 29-07-2021 |
| US 2020278601 | A1 | 03-09-2020 | CN | 111638591 A | 08-09-2020 |
| | | | JP | 2020140154 A | 03-09-2020 |
| | | | US | 2020278601 A1 | 03-09-2020 |

EPO FORM P0459

For more details about this annex : see Official Journal of the European Patent Office, No. 12/82